Europäisches Patentamt

European Patent Office

Office européen des brevets

(11) Publication number: **0 146 009**

**B1**

(12) **EUROPEAN PATENT SPECIFICATION**

(45) Date of publication of patent specification: **27.04.88**

(21) Application number: **84114201.1**

(22) Date of filing: **24.11.84**

(51) Int. Cl.⁴: **E 02 D 5/80,** F 16 L 1/02,
E 02 F 3/96, E 21 B 7/02,
E 02 F 9/16

(54) **Device for driving ground anchors for anchoring fluid conveying pipelines to the ground.**

(30) Priority: **28.11.83 IT 364183**

(43) Date of publication of application:
**26.06.85 Bulletin 85/26**

(45) Publication of the grant of the patent:
**27.04.88 Bulletin 88/17**

(84) Designated Contracting States:
**DE FR GB**

(56) References cited:
**EP-A-0 034 134
DE-A-2 926 116
DE-B-1 298 939
FR-A-1 274 580
FR-A-1 362 691
FR-A-2 278 855
US-A-3 832 861
US-A-4 048 875
US-A-4 398 850**

(73) Proprietor: **Lolli, Mario
Via Porrettana Sud, 39
I-40043 Marzabotto (Province of Bologna) (IT)**

(72) Inventor: **Lolli, Mario
Via Porrettana Sud, 39
I-40043 Marzabotto (Province of Bologna) (IT)**

(74) Representative: **Modiano, Guido et al
MODIANO, JOSIF, PISANTY & STAUB Modiano
& Associati Via Meravigli, 16
I-20123 Milan (IT)**

Courier Press, Leamington Spa, England.

## Description

This invention relates to a device for driving ground anchors for anchoring fluid conveying pipelines, in particular methane conveying pipelines, to the ground.

As is known, in laying pipelines intended to convey such fluids as methane over a distance, the pipeline must be anchored at intervals to the ground such as to prevent lateral movements thereof. It is current practice to use for this purpose a type of anchoring system consisting of a clamp which is placed over the pipe and secured to the ground by means of ground anchors which are driven into the ground, by means of a device comprising a head provided with a driving tool adapted to be rotatingly driven by a motor. A driving tool of this kind is, e.g. disclosed in DE—B—1298939.

This invention is directed to provide a device, which enables such ground anchors to be driven into the ground, which is safe and reliable in operation, while being easy to operate and versatile in application.

The above aim is achieved by a device whose characteristics are defined in the claims.

The features of the invention will be more clearly apparent from the following detailed description of a preferred embodiment of this device for driving ground anchors for anchoring fluid conveying pipelines to the ground, with reference to the accompanying illustrative drawings, where:

Figure 1 is a vertical cross-section view of a pipeline as anchored to the ground by means of ground anchors;

Figure 2 is a general view of a device for driving ground anchors into the ground, as mounted on a tractor type vehicle;

Figure 3 is a side view of this device for driving ground anchors;

Figure 4 is a sectional view taken along the line IV—IV of Figure 3; and

Figure 5 is an exploded detail view of a means for driving said ground anchors into the ground.

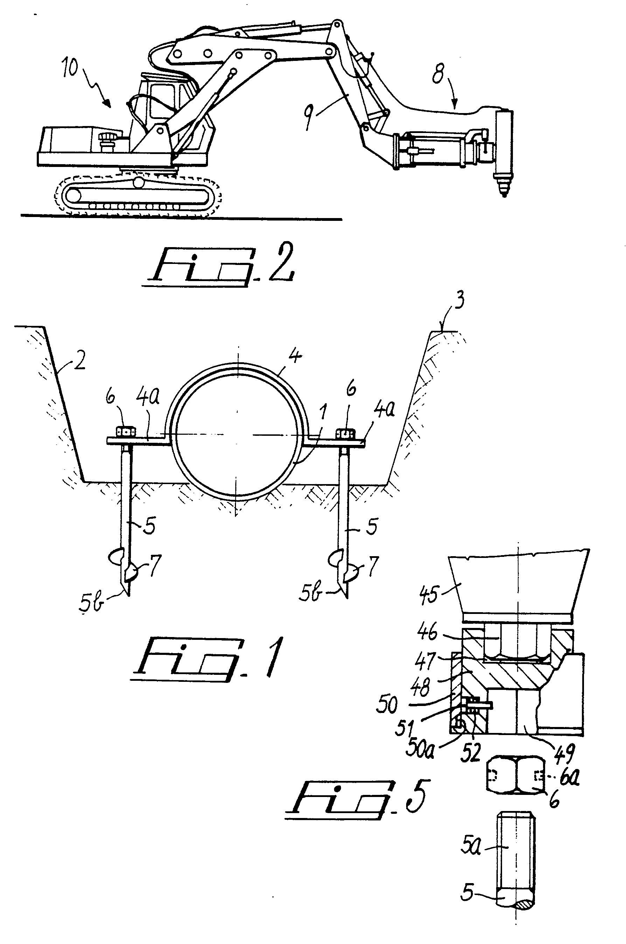

With reference first to Figure 1, indicated at 1 is a pipeline intended to convey fluids such as methane over a distance, which pipeline, in the illustrated instance, is laid at the bottom of a trench 2, below the ground level 3.

For anchoring the pipeline 1 to the ground, a clamp 4 is provided which has a substantially semi-circular profile, the internal radius whereof corresponds to the external radius of the pipe. The clamp 4 has at its opposite ends radial extensions 4a, facing outwards, wherethrough a hole is formed for the passage of respective ground anchors or anchoring screw members 5.

The ground anchors 5 comprise a cylindrical shank having a threaded section 5a at the top end, to receive a respectively threaded nut 6, and a sharp point 5b at the bottom end, which is formed by cutting the shank obliquely.

Close to the point 5b, the shank is formed with a helix 7 defining a screw. Expediently, the helix 7 is formed from an annular disk which is cut in a radial direction and welded to the screw shank in a spiral configuration.

In order to apply the required force to the ground anchors 5 to cause their penetration into the ground, a device, generally indicated at 8, is provided which is adapted to be carried at the end of an articulated boom 9 of a conventional tractor type vehicle 10, as shown in Figure 2.

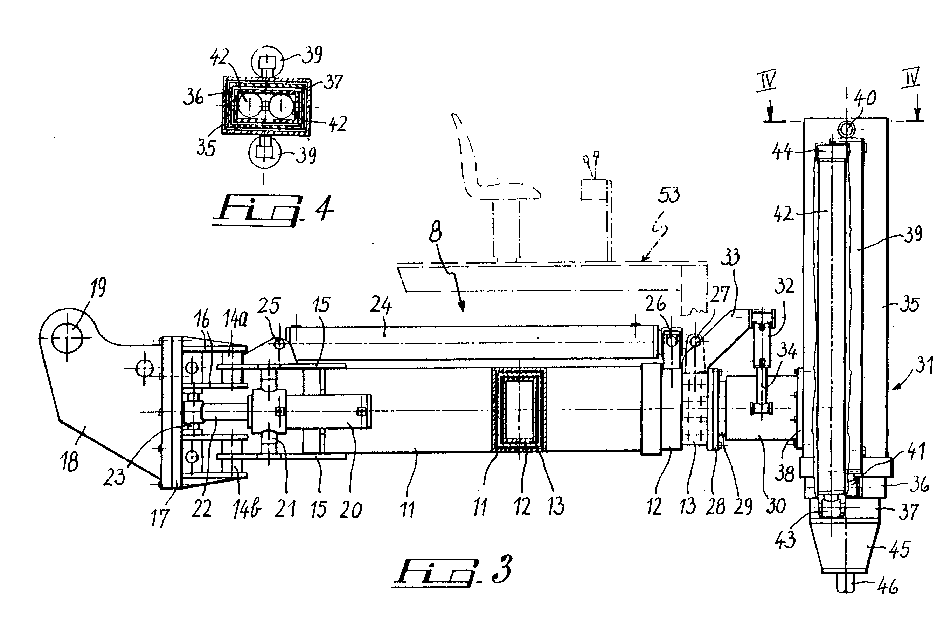

The device 8, shown best in Figures 3 to 5, comprises a tubular beam made up of telescopically slideable elements, which specifically includes an outer element 11, intermediate element 12, and inner element 13. The tubular elements 11, 12 and 13 of the beam have a rectangular profile, as shown in the sectional view of Figure 3.

The tubular beam is carried pivotally at one end, about an axis lying perpendicularly thereto and substantially vertical in the working position, by means of coaxial pivot pins 14a, 14b which are mounted to respective plates 15 attached at the top and bottom to the outer element 11 of the beam. The pins 14a, 14b are articulated on brackets 16 of a flange 17 connected to a mount 18 which is adapted to be articulated at 19 to the boom 9 of the tractor. The tubular beam 11 has, applied laterally thereto on opposite sides, a pair of jacks 20 operative to drive it rotatively. The jacks 20 are mounted pivotally on respective axles 21 between the plates 15, parallel to the pins 14a, 14b, and have their rod 22 articulated, in turn, with their end to a pin 23 mounted between the brackets 16.

Located longitudinally above the tubular beam 11 is a double-acting jack 24 which is effective to sequentially slide out the elements 12 and 13 of the beam. The jack 24 is attached at 25 to the beam 11, and at 26, 27 to the beam elements 12, 13, respectively.

The inner element 13 of the tubular beam has a short shaft 29 attached frontally thereto by means of a flange 28.

Mounted rotatably on the shaft 29 is a sleeve 30 which carries, in turn, a crosswise mounted head, generally indicated at 31 for applying force to drive said ground anchors into the ground.

The sleeve 30 is driven rotatively on the shaft 29 by a pair of articulated jacks 32, which extend substantially vertically in their working position and are articulated to an arm 33 projecting upwardly from the inner beam 13; the rods 34 of the jacks 32 are pivoted, at diametrically opposed locations, to the outside of the sleeve 30.

The head 31 of the device 8 comprises, in turn, three rectangular profile tubular elements, indicated at 35, 36 and 37 respectively, as shown in Figure 4. The outer element 35 is fixed, through a flange 38, to the sleeve 30, the intermediate 36 and inner 37 elements being telescopically slideable in a downward direction.

The axial sliding movement of the intermediate element 36 relatively to the outer element 35 is determined by a pair of jacks 39 arranged longitudinally on the outside of the element 35 on opposite sides thereof; the jacks 39 are attached at 40 to the element 35, and at 41 to the element 36.

A further pair of jacks 42 are arranged longitudinally within the inner element 37, being attached thereto at 43 to slidingly drive the inner element relatively to the intermediate element 36, whereto they are attached at 44. The lower portion of the element 37 of the head 31, which is enclosed by a case 45, accommodates a hydraulic motor, not shown in the drawing, which is provided with a reduction gear adapted to rotatively drive a driving tool 46 formed with a hexagonal profile.

As shown best in Figure 5, the driving tool 46 is adapted to fit on a correspondingly shaped seat 47 formed axially in an adapter 48 which has at its opposite end a corresponding hexagonal seat 49 adapted to engage with the nut 6 of the ground anchor or anchoring screw 5.

Mounted slidably on the adapter 48 is a bushing 50 which, in a lowered position thereof, is adapted to act on a pair of small movable plungers 51 against the bias of a respective spring 52, in housings formed diametrically opposite in the adapter. The small plungers 51 define a shank which, with the bushing 50 in said position, projects radially into the seat 49 in the adapter 48 so as to engage with a corresponding pair of holes 6a in the nut 6.

The bushing 50 has on its interior an annular cutout 50a adapted to permit, in a raised position of the bushing, outward movements of the plungers 51.

The device 8 is brought close to a ground anchor 5 to be driven into the ground by means of the articulated beam 9 of the tractor 10.

The alignment of the head 31 of the device with said ground anchor, is instead accomplished by operating the device itself. In fact, in addition to the telescopic extension of the tubular beam 11, 12, 13 under the drive from the double-acting jack 24, it is possible to drive by means of the jacks 20 the angular rotation of the beam itself in the horizontal plane, and by means of the jacks 32, the axial rotation of the sleeve 30 carrying the head 31.

Expediently, it may be arranged that the controls for the device 8 are mounted on a platform, as schematically indicated by the dash line 53 in Figure 3, equipped with a seat for the operator and being mounted on the inner element 13 of the tubular beam.

Then, the telescopic sliding movements of the elements 36 and 37 of the head 31 are driven by the jacks 39 and 42, until the driving tool 46 is inserted into the seat 47 in the adapter 48 mounted on the nut 6 of the ground anchor 5 to be driven into the ground; the nut 6 has been locked to the adapter 48, by means of the radial plungers 51, by causing the bushing 50 to slide downwards.

It should be noted that the nut 6 is threaded onto the threaded section 5a of the ground anchor after the shank of the latter has been inserted into the passage hole in the expansion 4a of the clamp 4; the clamp 4 is placed on the pipe 1 at a predetermined position, in readiness for anchoring to the ground.

On insertion of the driving tool 46 into the adapter 48, the gear motor of the device 8 is activated which rotates the driving tool. Thus, the nut 6 is first completely screwed onto the ground unchor 5 until the shank abuts against the bottom of the seat 49 in the adapter 48; thereafter, since the nut 6 can move no farther relatively to the anchoring screw shank, the ground anchor 5 is caused to rotate and, by virtue of the screwing force, is effective to be driven into the ground.

On completion of the operation, of inserting the ground anchor 5 into the ground, the driving tool 46 is separated by raising the head 31 of the device 8, and the adapter 48 is removed by raising the bushing 50 so as to disengage the plungers 51 from the nut 6.

Of course, the device 8 may be mounted on any suitable carrier.

In practicing the invention, any materials, shapes and dimensions may be used contingent on requirements.

**Claims**

1. A device for driving ground anchors into the ground for anchoring fluid conveying pipelines, in particular methane conveying pipelines, to the ground, by means of a clamp (4) having a substantially semi-circular profile, placed on the pipeline (1) and having at its ends radial extensions (4a) facing outwards and adapted to receive ground anchors (5) therethrough, said device comprising a head (31) for applying driving force to said ground anchors (5), said head being provided with a driving tool (46) adapted to be rotatingly driven by a motor, characterized in that said head (31) includes a plurality of tubular elements (35, 36, 37) mounted telescopically and adapted to extend in a downward direction, and said motor is accommodated within the innermost (37) of said tubular elements.

2. A device according to claim 1, characterized in that said driving tool (46) is adapted to fit in a prismatic seat (47) of an adapter (48) having a further seat (49) adapted to receive a nut (6) to be screwed on to the top of the shank of said ground anchors (5), after said shank has been inserted through said radial extension (4a) in said clamp (4).

3. A device according to claim 2, characterized in that it further comprises a bushing (50) slidably mounted on said adapter and a pair of elastically biased plungers (51) slidably mounted in diametrically opposite housings formed in said adapter, said plungers being adapted to be engaged by said bushing so as to project into said further seat (49) and engage with corresponding holes (6a) of said nut.

4. A device according to claim 1, characterized in that said head (31) is mounted pivotally about an axis extending perpendicularly thereto on the end of a beam (11) including telescopically slideable tubular elements (12, 13), said beam (11) having the opposite end pivotally supported about an axis perpendicular to said beam a mount means (18) for attachment to a tractor type vehicle (10).

5. A device according to claim 4, characterized in that mounted above said beam (11) is a platform with a seat (53) carrying control means for operating the device.

**Patentansprüche**

1. Vorrichtung für das Eintreiben von Bodenankern zum Verankern von Rohrfernleitungen für strömende Medien, insbesondere Methanfernleitungen, am Boden mittels Schellen (4), mit im wesentlichen halbkreisförmigen Profil, welche auf die Rohrfernleitung (1) aufgesetzt sind und an ihren Enden nach außen weisende radiale Fortsätze (4a) besitzen, in welche Bodenanker (5) einsteckbar sind, wobei die Vorrichtung einen Kopf (31) zur Ausübung einer Treibkraft auf die Bodenanker (5) aufweist, welcher Kopf mit einem von einem Motor in Drehung antreibbaren Treibwerkzeug (46) versehen ist, dadurch gekennzeichnet, daß der Kopf (31) eine Vielzahl von Rohrelementen (35, 36, 37) enthält, die teleskopartig montiert sind und sich nach unten erstrecken, und daß der Motor innerhalb der innenseiten (37) der Rohrelemente angeordnet ist.

2. Vorrichtung nach Anspruch 1, dadurch gekennzeichnet, daß das Treibwerkzeug (46) in einen prismatischen Sitz (47) eines Adapters (48) eingepaßt ist, welcher einen weiteren Sitz (49) aufweist, der zur Aufnahme einer Mutter (6) dient, welche auf den Kopf des Schaftes des Bodenankers (5) aufgeschraubt wird, nachdem der Schaft durch den radialen Fortsatz (4a) in die Schelle (4) eingesetzt wurde.

3. Vorrichtung nach Anspruch 2, dadurch gekennzeichnet, daß sie weiters eine Hülse (50), die verschiebbar auf dem Adapter montiert ist, und ein Paar von federbelasteten Kolben (51) aufweist, welche verschiebbar in einander diametral gegenüberliegenden, im Adapter ausgebildeten Gehäuse montiert sind und mit der Hülse in Eingriff bringbar sind, um in den genannten weiteren Sitz (49) hineinzuragen und mit entsprechenden Löchern (6a) der Mutter in Eingriff zu gelangen.

4. Vorrichtung nach Anspruch 1, dadurch gekennzeichnet, daß der Kopf (31) um eine zu ihm senkrecht verlaufende Achse am Ende eines Balkens (11) schwenkbar ist, welche teleskopartig verschiebbare Rohrelemente (12, 13) aufweist, wobei das andere Ende des Balkens (11) um eine zum Balken senkrecht verlaufende Achse durch Montageeinrichtung (18) zur Befestigung an einem Zugfahrzeug (10) schwenkbars gehaltert ist.

5. Vorrichtung nach Anspruch 4, dadurch gekennzeichnet, daß oberhalb des Balkens (11) eine Plattform mit einem Sitz (53) montiert ist, der Steuereinrichtungen zum Betrieb der Vorrichtung trägt.

**Revendications**

1. Dispositif pour enfoncer dans le sol des tirants d'ancrage, pour ancrer dans le sol des conduites de fluide, en particulier des conduites de méthane, à l'aide d'un collier de serrage (4) à profil sensiblement semi-circulaire, placé sur la conduite (1) et ayant à ses extrémités des prolongements radiaux (4a) orientés vers l'extérieur et conçus pour être traversés par des tirants d'ancrage (5), ledit dispositif comportant une tête (31) pour appliquer une force d'enfoncement aux tirants d'ancrage (5), ladite tête étant pourvue d'un outil d'enfoncement (46) conçu pour être entraîné en rotation par un moteur, caractérisé en ce que ladite tête (31) comprend une pluralité d'éléments tubulaires (35, 36, 37) montés télescopiquement et conçus pour réaliser une extension vers le bas, et en ce que ledit moteur est logé dans le plus interne (37) desdits éléments tubulaires.

2. Dispositif selon la revendication 1, caractérisé en ce que l'outil d'enfoncement (46) est conçu pour s'ajuster dans une surface prismatique d'appui (47) d'un adaptateur (48) ayant une autre surface d'appui (49) pour recevoir un écrou (6) à visser sur le dessus de la tige des tirants d'ancrage (5), après que ladite tige a été introduite à travers ledit prolongement radial (4a) du collier de serrage (4).

3. Dispositif selon la revendication 2, caractérisé en ce qu'il comporte en outre un manchon (50) monté pour pouvoir coulisser sur ledit adaptateur et deux plongeurs (15) sollicités de manière élastique, montés pour pouvoir coulisser dans des logements diamétralement opposés formés dans ledit adaptateur, les plongeurs étant conçus pour être attaqués par ledit manchon afin de faire saillie dans ladite autre surface d'appui (49) et à s'engager dans des trous (6a) correspondants dudit écrou.

4. Dispositif selon la revendication 1, caractérisé en ce que ladite tête (31) pivote autour d'un axe s'étendant perpendiculairement à celle-ci à l'extrémité d'un poutre (11) comprenant des éléments tubulaires (12, 13) à coulissement télescopique, ladite poutre (11) ayant son extrémité opposée supportée pour tourner autour d'un axe perpendiculaire à ladite poutre par moyen de support (18) à fixer à un véhicule (10) de type tracteur.

5. Dispositif selon la revendication 4, caractérisé en ce que au-dessus de la poutre (11) est montée une plateforme avec un siège (53) portant des moyens de commande pour manoeuvrer le dispositif.

FIG.2

FIG.1

FIG.5

FIG. 4

FIG. 3

0 146 009